Europäisches Patentamt

European Patent Office

Office européen des brevets

(11) Numéro de publication: **0 189 946**

**A2**

# (12) DEMANDE DE BREVET EUROPEEN

(21) Numéro de dépôt: 86101542.8

(22) Date de dépôt: 30.09.83

(51) Int. Cl.⁴: **G02B 6/38**

(30) Priorité: 08.10.82 FR 8216905

(43) Date de publication de la demande:
06.08.86 Bulletin 86/32

(60) Publication number of the original application in accordance
with Art.76 EPC: 0 107 989

(84) Etats contractants désignés:
DE GB IT

(71) Demandeur: SOCAPEX
10 bis, quai Léon Blum
F-92153 Suresnes(FR)

(72) Inventeur: Parchet, Pierre
THOMSON-CSF SCPI 19, avenue de Messine
F-75008 Paris(FR)
Inventeur: Bertho, Dominique
THOMSON-CSF SCPI 19, avenue de Messine
F-75008 Paris(FR)

(74) Mandataire: Ruellan-Lemonnier, Brigitte et al
THOMSON-CSF SCPI 19, avenue de Messine
F-75008 Paris(FR)

(54) Embout de positionnement pour plusiers fibres optiques.

(57) La présente invention concerne un embout de positionnement pour au moins deux et au plus quatre fibres optiques.
Il comporte à sa face arrière un nombre d'ouvertures (23)
égal au nombre des fibres optiques qu'il comporte, ces
ouvertures se prolongeant jusqu'à un réservoir de colle unique (33) et, à sa face avant, un nombre d'ouvertures (26) au
moins égal à la moitié du nombre des fibres optiques.

# FIG_1-d

EP 0 189 946 A2

## EMBOUT DE POSITIONNEMENT POUR PLUSIEURS FIBRES OPTIQUES.

La présente invention a pour objet un embout de positionnement pour plusieurs fibres optiques.

On connaît du brevet français 2 487 528 un embout de raccordement d'un faisceau de fibres optiques comportant deux faces de référence formant un dièdre saillant. Les fibres sont mises en position dans l'embout grâce à un dispositif de montage comportant une rainure en forme de V délimitée par des cales étalons et dans lequel des piges cylindriques sont alignées le long des flancs de la rainure en forme de V et maintenues en place par l'application d'un système de forces approprié. L'alignement des fibres de l'embout est alors réalisé en plaçant chacune d'entre elles entre deux piges cylindriques qui sont maintenues en position par un tampon présentant un profil en forme de V et venant en contact avec les fibres optiques. L'application d'un système de forces sur l'ensemble des piges cylindriques est difficile à obtenir de manière satisfaisante et par conséquent, les forces auxquelles sont soumises les fibres optiques disposées entre les piges cylindriques et produites par l'action du tampon les positionnant dans celles-ci sont difficiles à contrôler, étant donné qu'elles sont notamment très dépendantes de la position des piges cylindriques. Il en résulte que certaines fibres peuvent être exagérément écrasées, ce qui peut nuire à leur positionnement.

Pour pallier ces inconvénients, la présente invention a pour objet un embout qui soit de structure plus simple que celui de l'art antérieur et dans lequel les forces auxquelles sont soumises les fibres optiques puissent être contrôlées avec précision lors de leur montage.

L'invention concerne donc un embout de positionnement pour au moins deux et au plus quatre fibres optiques, caractérisé en ce qu'il comporte à sa face arrière un nombre d'ouvertures égal au nombre des fibres optiques qu'il comporte, ces ouvertures se prolongeant jusqu'à un réservoir de colle unique et, à sa face avant, un nombre d'ouvertures au moins égal à la moitié du nombre des fibres optiques.

L'invention sera mieux comprise à la lecture de la description qui va suivre, donnée à titre d'exemple non limitatif, en se reportant aux dessins ci-annexés où :

- la figure 1a représente en perspective un dispositif de montage d'un embout suivant l'invention ;

- la figure 1b représente un détail de la figure 1a en vue de face ;

- la figure 1c représente l'embout de la figure 1a en vue de face ;

- la figure 1d représente une coupe dans le plan des fibres, de l'embout de la figure 1a ;

- les figures 2a et 2b représentent une variante de montage, plus particulièrement adaptée à un embout présentant un seul perçage pour le passage de deux fibres ;

- les figures 3a et 3b représentent un mode de réalisation de l'invention adapté au positionnement de quatre fibres optiques ;

- les figures 4 et 5 représentent des variantes des figures 1b et 3a respectivement.

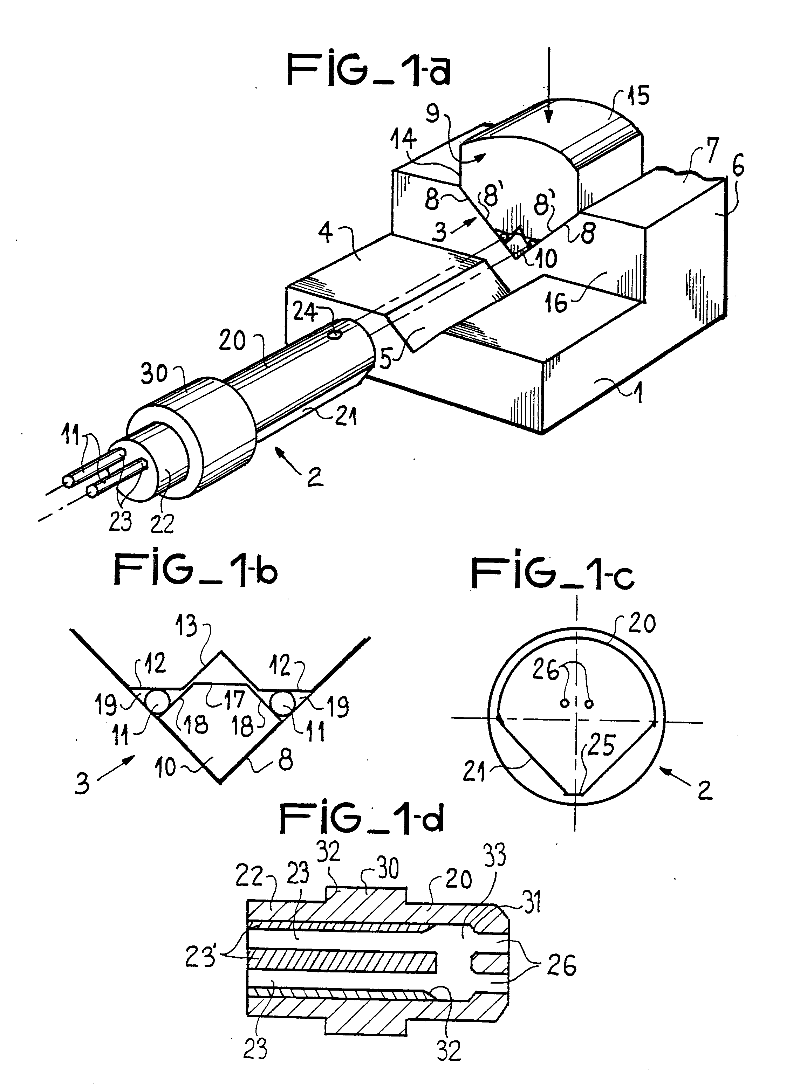

Sur la figure 1a, une embase 1 comporte une face plane inférieure 4 dans laquelle est ménagée une rainure 5 en forme de V susceptible de recevoir un contour correspondant 21 ménagé dans une partie cylindrique avant 20 d'un embout 2. L'invention s'applique en général à tout embout pouvant être orienté angulairement avec précision, par exemple un embout cylindrique pourvu d'une rainure de positionnement angulaire. L'embout 2 comporte à sa partie arrière 22 deux ouvertures 23 dont chacune reçoit une fibre optique 11 et une collerette centrale 30 permettant son montage dans un corps d'embout non représenté. L'embase 1 comporte également une surface plane supérieure 7 disposée en retrait par rapport à la surface plane inférieure 4 et reliée à celle-ci par une face verticale 16 formant butée. Dans la surface 7 est ménagée une rainure en forme de V 3 dont les parois sont repérées en 8. Au fond de la rainure 3, est disposée une cale calibrée 10 de section carrée. Cette cale calibrée définit de chaque côté un profil en forme de V dont une des parois est constituée par une paroi 8 de la rainure 3 et dont l'autre paroi est constituée par un des côtés 18 de la cale calibrée 10. Une pièce d'appui 15 présente une paroi supérieure 15 et deux faces latérales parallèles 14 se prolongeant vers le bas par deux plans inclinés 8' disposés de manière à correspondre au profil de la rainure 3. Les plans inclinés 8' ne se prolongent pas jusqu'à la partie inférieure du V 3, mais seulement jusqu'à une face horizontale 12 au centre de laquelle est ménagée une saignée 13 parallèle à l'axe de la rainure 3.

Comme on le voit mieux à la figure 1b, une fibre optique 11 est disposée dans le premier et le deuxième profil 19 en forme de V délimitées par la rainure 3 dont les faces 8 peuvent faire entre elles un angle de 90° et la cale calibrée 10 et lorsque la pièce d'appui 15 est en position dans la rainure 3, chacune des deux portions du plan 12 vient en contact avec la fibre optique correspondante 11. La rainure 13 est réalisée de telle sorte que la pièce d'appui n'est pas en contact avec la cale calibrée 10. Pour faciliter cette absence de contact, la cale calibrée 10 présente une arête 17 chanfreinée disposée du côté opposé au fond de la rainure 3, la pièce d'appui 9 présentant la saignée longitudinale 13 au milieu de sa face inférieure 12. Dans ces conditions, la pièce d'appui 9 venant en butée sur les parois 8 de la rainure 3 en forme de V, la position du plan 12 est déterminée avec précision, ce qui, compte tenu des dimensions géométriques de la cale 10, permet de doser exactement l'effort subi par les fibres optiques 11 pour leur positionnement par placage au fond des V secondaires. En pratique, l'écrasement des fibres ainsi produit sera limité au maximum à quelques microns seulement, de manière à éviter de soumettre celles-ci à des contraintes produisant une déformation des fibres nuisibles à la précision du centrage.

A titre de variante, le plan 12 est tel qu'un jeu inférieur à 3 microns environ existe avec les fibres, celles-ci étant alors simplement guidées et non plaquées.

La figure 1c représente en vue de face l'embout 2. Les faces 21 du contour en forme de V se rejoignent par une face 25. Les fibres optiques 11 qui sont introduites par des ouvertures 23 en nombre égal à celui des fibres optiques de l'embout (ici 2) situées dans la partie cylindrique arrière 22 de l'embout, débouchent sur la face avant au niveau de deux ouvertures 26 qui, lorsque l'embout est positionné dans la rainure 5 en butée sur la face verticale 16, se trouvent respectivement en face des premier et deuxième profils 19 en forme de V. Les ouvertures 26 sont de préférence situées, comme représenté, dans le plan médian de l'embout.

La mise en place des fibres optiques dans l'embout est alors réalisé de la manière suivante (voir figure 1d). Les fibres optiques 11 sont introduites dans les ouvertures 23 de l'embout 2 ménagées dans une pièce rapportée 23' et qui ont un diamètre légèrement supérieur à celui des fibres optiques de telle sorte que d'une part elles puissent coulisser librement et que d'autre part les ouvertures 23 réalisent un pré-guidage axial des fibres. Les fibres 11 traversent ensuite une chambre 33 en communication avec l'extérieur de l'embout par une ouverture 24 (figure 1a) qui s'évase en 32 à partir des ouvertures 23 et qui fait fonction de réserve de colle et pénètrent dans la ou les ouvertures 26 dont le diamètre est également supérieur à celui des fibres. L'introduction des fibres dans les ouvertures 26 est facilitée par la présence des chanfreins 31. Les fibres optiques dépassant de la face avant de l'embout 2 sont ensuite positionnées dans les profils en forme de V 19 à l'aide de la pièce d'appui 9 et la colle est alors introduite par une ouverture 24 ménagée à l'avant de la partie supérieure de la partie cylindrique 20, ouverture 24 qui est en communication avec la chambre 33, de telle sorte que la colle qui pénètre dans la chambre de remplissage 33, et par le jeu des ouvertures 26 soit susceptible de maintenir les fibres en position. Le choix du diamètre 26 est de préférence tel que la colle pénètre par capillarité autour des fibres dans les ouvertures 26, sans toutefois s'écouler vers l'extérieur. Après séchage de la colle, les fibres sont coupées puis polies et l'embout est prêt à être utilisé.

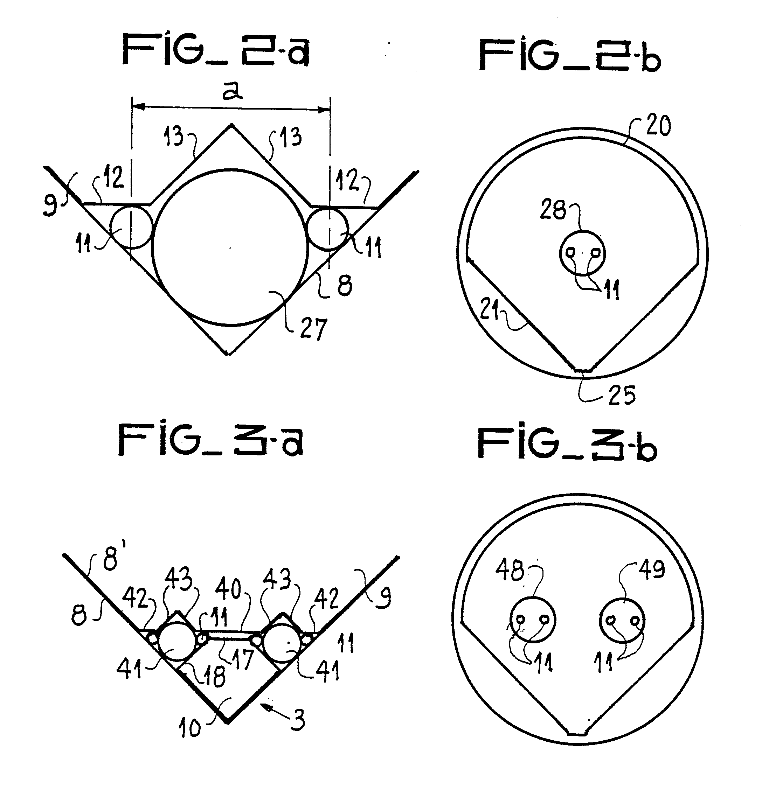

La figure 2a est une variante de la figure 1b, dans laquelle la cale calibrée 10 est remplacée par une pige cylindrique de précision 27. Cette solution convient particulièrement au cas où on veut diminuer l'entraxe entre les fibres 11. En effet, pour un entraxe a de 0,5 mm, et pour des fibres de 125 $\mu$m de diamètre, le diamètre de la pige cylindrique 27 est nominalement de 0,39 mm. Dans cette gamme de dimensions, il serait assez difficile de réaliser une cale calibrée de la forme de la cale 10. Comme représenté à la figure 2b, un entraxe faible entre les fibres 11, par exemple de l'ordre de 0,5 mm, permet de faire déboucher celles-ci par une seule ouverture 28 disposée sur la face avant de l'embout 2. Dans ce cas de figure, et comme précédemment, les fibres sont introduites par deux ouvertures 23 ménagées à l'arrière de l'embout 2.

La figure 3a représente une variante permettant de disposer quatre fibres optiques dans un embout comportant sur sa face avant de préférence deux ouvertures 48 et 49 recevant chacune une paire de fibres optiques 11. On comprendra que ce mode de réalisation est également applicable au cas d'un embout comportant trois ou bien quatre ouvertures sur sa face avant. Une cale calibrée telle que 10, de dimensions appropriées, reçoit sur chacun de ses premier et second profils en forme de V une cale calibrée, ici une pige cylindrique 41. Chaque pige cylindrique 41 délimite des profils secondaires en forme de V dont chacun est tel qu'il puisse recevoir une fibre optique. La pièce d'appui 9 reposant sur les flancs 8 de la rainure 3, sa face inférieure comporte trois régions coplanaires, une région centrale 40 appuyant sur les deux fibres centrales 11, et deux régions latérales 42 appuyant sur les fibres optiques externes 11. A titre de variante, on peut, comme dans le cas précédent, laisser un léger jeu entre les régions 40 et 42 et les fibres. Les régions 40 et 42 sont séparées par des saignées 43 qui permettent à la pièce d'appui 9 de venir au contact des fibres optiques 11 sans toucher les piges cylindriques 41. On remarquera que les fibres optiques ont été représentées dans un plan, ce qui constitue une réalisation préférée, mais que les dimensions des pièces de l'assemblage peuvent être choisies de manière à obtenir une disposition différente des fibres optiques dans l'embout. De même, d'autres formes de cales calibrées peuvent être mises en oeuvre.

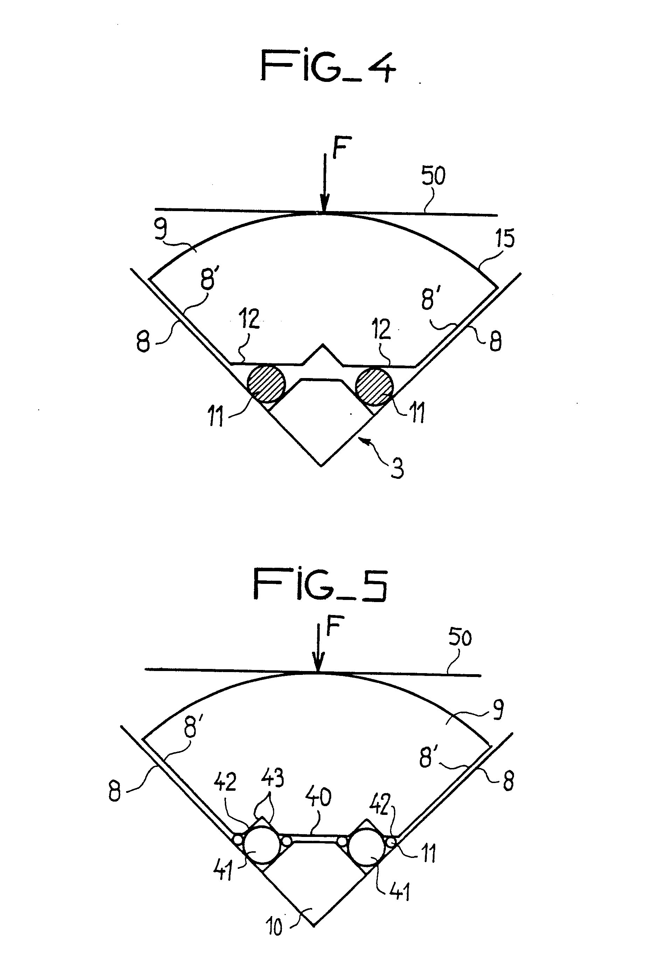

Selon la figure 4, la pièce d'appui 9 est réalisée de telle sorte que, si elle venait en butée sur les parois 8 de la rainure 3 en forme de V, la position du plan 12 correspondrait à un écrasement théorique des fibres égal au minimum à quelques microns et au maximum à 20 microns environ. Autrement dit, la tolérance de fabrication de la pièce d'appui peut autoriser des valeurs comprises dans cette fourchette, évitant ainsi une trop grande précision dans la réalisation de la pièce d'appui 9. Dans ces conditions, la pièce d'appui 9 vient en contact avec les fibres 11 sans que ses deux faces 8' soient en butée sur les faces 8 du V constitué par la rainure 3 et la force d'appui sur les fibres 11 est limitée par un système de pression taré appliquant une pression sur les fibres (correspondant selon un exemple préféré de réalisation à une force de l'ordre de 500 grammes maximum pour une pièce d'appui 9 appuyant sur les fibres sur une longueur de 20 mm) telle que l'écrasement de celles-ci reste de l'ordre de quelques microns de manière à conserver une bonne précision d'alignement. Les faces 8' de la pièce d'appui 9 restent très voisines des faces 8 du V3.

Dans ce mode de réalisation, les faces 8 de la pièce d'appui 9 servent à limiter le basculement éventuel d la pièce d'appui 9 sous l'action de la force F appliquée suivant l'axe de la rainure 3. Le basculement peut en outre être largement contrecarré en donnant à la face supérieure 15 de la pièce d'appui 9 un profil cylindrique dont l'axe est confondu avec l'axe de symétrie des fibres et en appliquant la force F par l'intermédiaire d'une partie plane 50, ce qui permet de faire passer la force F par le plan médian des deux fibres.

La figure 5 représente la même conception que la figure 4, mais dans le cas où quatre fibres sont mises en oeuvre.

L'invention permet de disposer jusqu'à quatre fibres optiques dans un embout de dimensions standard utilisé habituellement pour le centrage d'une seule fibre optique. Cette disposition est particulièrement avantageuse en ce sens que la réalisation de contours en forme de V tels que 21 dans un embout devient plus délicate au fur et à mesure que les dimensions de celui-ci augmentent.

## Revendications

1. Embout de positionnement pour au moins deux et au plus quatre fibres optiques, caractérisé en ce qu'il comporte à sa face arrière un nombre d'ouvertures (23) égal au nombre des fibres optiques qu'il comporte, ces ouvertures se prolongeant jusqu'à un réservoir de colle unique (33) et, à sa face avant, un nombre d'ouvertures (26), au moins égal à la moitié du nombre des fibres optiques.

0 189 946

**FIG_1-a**

**FIG_1-b**

**FIG_1-c**

**FIG_1-d**

# FIG_2·a

# FIG_2·b

# FIG_3·a

# FIG_3·b

## FiG_4

## FiG_5